# EUROPEAN PATENT SPECIFICATION

(11) **EP 2 036 241 B1**
(45) Date of publication and mention of the grant of the patent: **06.05.2020**
(21) Application number: 07853495.5
(22) Date of filing: 20.06.2007
(51) Int. Cl.: H04L 29/06, H04M 3/42, H04M 3/51

(54) **SYSTEMS AND METHODS FOR RECORDING AN ENCRYPTED INTERACTION**
SYSTEME UND VERFAHREN ZUR AUFZEICHNUNG EINER VERSCHLÜSSELTEN INTERAKTION
SYSTÈMES ET PROCÉDÉS D'ENREGISTREMENT D'UNE INTERACTION CRYPTÉE.

(30) Priority: 30.06.2006 US 428222; 30.06.2006 US 428239
(43) Date of publication of application: 18.03.2009
(73) Proprietor: Verint Americas Inc., Roswell, Georgia 30076 (US)
(72) Inventor: SPOHRER, Daniel T., Alpharetta, Georgia 30022 (US); WILLIAMS, Jamie R., Fleet, Hampshire GU51 1EG (GB); CALAHAN, Marc A., Woodstock, Georgia 30188 (US)
(74) Representative: Goddard, Frances Anna
(86) International application number: PCT/US2007/071639
(87) International publication number: WO 2008/030649

(56) References cited:
- US-A1- 2003 169 856
- US-A1- 2004 193 897
- US-A1- 2005 174 937
- US-A1- 2005 265 554
- US-A1- 2006 059 563
- US-A1- 2006 089 916
- US-A1- 2006 101 098
- US-B1- 6 529 602
- "Digital Broadband Cable access to the public telecommunications network; IP Multimedia Time Critical Services; Part 20: Lawful Interception; Subpart 01: CMS based Voice Telephony Services; ETSI TS 101 909-20-01", IEEE, LIS, SOPHIA ANTIPOLIS CEDEX, FRANCE, vol. AT-Digital, no. V0.0.23, 1 November 2004 (2004-11-01), XP014029971, ISSN: 0000-0001

## Description

### TECHNICAL FIELD

This disclosure relates to recording contact center interactions, and more particularly to recording encrypted contact center interactions.

### BACKGROUND AND SUMMARY

Call centers have long been used by companies for communicating with their customers on a wide range of topics, including installation, sales, service, cancellation, etc. As ways for communicating with customers have evolved from voice interactions, call centers have been transformed into contact centers which communicate with customers on a variety of media, including electronic mail (e- mail), internet relay chat (IRC), world-wide web, voice over internet protocol (VoIP), text messaging, etc. As these media have evolved, there has been a need for technology to capture these interactions for many purposes, including: recordkeeping, quality, training, etc.

However, the digital nature of this new media can make it more difficult for developing technology to capture these interactions. In particular, encryption technology can inhibit existing recording devices from capturing and/or flagging meaningful information. The present invention provides a system for recording an encrypted data stream, the encrypted data comprising a contact center interaction, the system comprising: a control protocol switch interface configured to interface with a protocol switch and receive an interaction setup signal, the interaction setup signal including an exchange of encryption key information associated with an interaction; an encryption key information buffer coupled to the control protocol switch interface, the encryption key information buffer being configured to receive the encryption key information and hold the encryption key information; a data switch interface configured to interface with a data switch and receive an encrypted data stream associated with the interaction, the encrypted data stream being encrypted such that devices that do not have an encryption key associated with the encrypted data stream are inhibited from reviewing the interaction data; a recording module configured to record the interaction based on an event detected in the interaction; wherein the system is operable to subsequently decrypt the encrypted data stream using associated encryption key information held in the encryption key information buffer, characterised in that the system is not a party to the interaction, and wherein the recording module receives a duplicate media stream representing the interaction, and the encryption key information is received from the source of the duplicate media stream.
The present invention further provides a method for recording encrypted interaction data the method comprising the steps of: receiving an interaction setup signal at a recording device, the interaction setup signal comprising encryption key information associated with interaction data; storing the encryption key information in a key storage, the key storage being configured to store encryption key information for retrieval; receiving encrypted data stream at the recording device, the encrypted data stream representing an encrypted form of interaction data, the encryption being configured to inhibit review of the interaction data without an encryption key; storing the encrypted form of the interaction data in a system data store based on an event detected in the interaction; wherein the encrypted form of the interaction data is operable to be decrypted using the stored encryption key information, characterised in that the recording device is not a party to the interaction, and wherein the data switch interface receives a duplicate media stream representing the interaction, and the encryption key information is received from the source of the duplicate media stream.

US 6 529 602 discloses a method for recording audio information, including receipt of a request to initiate the recording; recording a phone conversation and storing it in a data storage device, the conversation being digitized and encrypted by crypto-processor so that it can only be decrypted using the appropriate decryption key; and providing a message ID number and a crypto-key to the parties.

The details of one or more embodiments of the disclosure are set forth in the accompanying drawings and the description below. Other features, objects, and advantages of the disclosure will be apparent from the description and drawings, and from the claims.

### DESCRIPTION OF DRAWINGS

FIG. 1 is a block diagram depicting a generic architecture for a contact center with a recording device.
FIG. 2 is a block diagram depicting an example architecture for recording encrypted voice over internet protocol (VoIP) data using an internet protocol span.
FIG. 3 is a block diagram depicting an example architecture for recording encrypted VoIP data via a directed signal. FIG. 4 is a block diagram depicting an example architecture for recording encrypted VoIP data via an emulated internet protocol (IP) phone traffic signal.
FIG. 5 is a block diagram depicting an example architecture for recording encrypted VoIP data via a softphone bank associated with the recording system.
FIG. 6 is a block diagram depicting an example architecture for recording encrypted VoIP data via a duplicate media stream sent to the recording system.
FIG. 7 is a block diagram depicting an example architecture for recording encrypted data at a recording system.
FIG. 8 is a flowchart illustrating an operational scenario for recording encrypted data.
FIG. 9 is a flowchart illustrating an operational scenario for encrypting recorded data for security.

### DETAILED DESCRIPTION

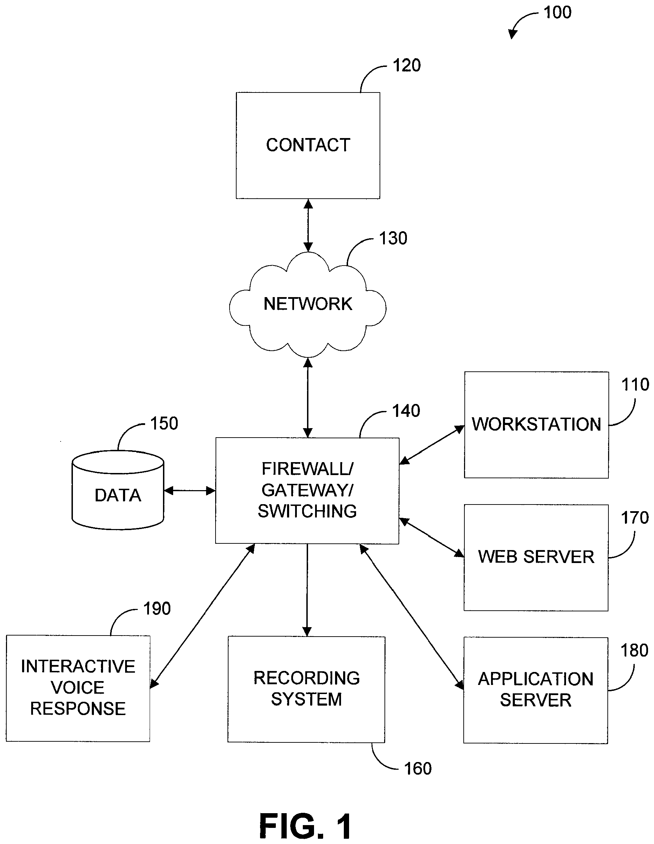

FIG. 1 shows a block diagram of a contact center architecture. It should be understood that the contact center architecture, in some examples of this disclosure, can include a variety of hardware for interfacing via various media. These may be occasionally referred to as multimedia contact centers. Some media methods for interfacing with a contact center, including for example: voice interaction, a web site, interactive voice response, an application server, instant messaging, chat, short message service (SMS), etc. It should be noted that although many types of media are enabled with respect to the contact center of FIG. 1, that this disclosure is intended to cover a variety of contact center types using any subset of media-types, except where context clearly dictates otherwise.

Voice interaction typically occurs via one or more workstations 110 at which a contact center agents could operate. The workstations 110 facilitate communication between an agent and a contact 120 via an external network 130 and internal network infrastructure 140. It should be understood that the internal network infrastructure used varies based upon the media being supported. For example, an analog telephone call, the hardware can include an automatic call distributor (ACD). More complex voice interaction hardware can include an interface to a public-switched telephone network (PSTN) such as private branch exchange(s), a voice over internet protocol (VoIP) switch(es), a data switch(es), automatic call distributors), softphone bank, etc.

It should also be understood that in various examples, the workstation can include a network interface operable to send and retrieve data from a contact center database 150 via the internal network infrastructure 140. The data can include, for example, customer data, account data, service data, preferences, application data, among many others. Such data can be useful in managing and/or routing contact interactions.

Interactions between contact center agents and contacts can be recorded via a recording system 160. The recording system 160 can capture a contact center interaction in any of a number of ways, each of which are known to those skilled in the art, and are intended to be included within the scope of this disclosure. For example, in some contact centers, a VoIP switch is used to handle control protocol for the network (SIP/SCCP), while a data switch handles the voice traffic (real-time transfer protocol (RTP)). The data switch can be configured to provide a network tap (internet protocol (IP) switch port analyzer (SPAN)). The interaction data is extracted via the network tap and provided to the recording system 160.

Alternatively, the recording device can participate in the call as a silent participant and obtain direct access to the interaction data in real-time. In products available from Avaya Inc. of Basking Ridge, NJ this type of participation is known as single step conferencing (SSC). However, it should also be understood that other solutions are available for receiving VoIP data, such as, for example, duplicate media streaming (DMS) as described below, and available from Nortel Networks of Brampton, Ontario, Canada, or Cisco Systems, Inc. of San Jose, CA, among others.

In further alternatives, the recording system 160 can include a soft-phone bank, and thereby controls a plurality of soft-phones which receive emulated IP phone traffic from a VoIP switch or a data switch. It should be understood that the recording system 160 can provide a selective recording system whereby only interactions that satisfy predetermined rules are recorded. The predetermined rules can specify recording of data upon the occurrence of certain events, such as, for example, a specific word being spotted, a voice amplitude outside of a normal threshold being detected, a talk-over condition being detected, etc. Moreover, the predetermined rules can include business rules, which determine when or whether to record based upon any business reasons. It should also be understood that in some examples of this disclosure the recording system can be a bulk recording system, such that all interactions are recorded. Other example recording systems of this disclosure can be both bulk and selective recording systems, such that all interactions are recorded at certain times, while less than all interactions, or pieces of interactions can be recorded at other times.

Web interaction can occur via web server 170. As should be understood, the web server 170 could include connection to a database 150 which includes a number of web pages. The stored web pages in some examples of this disclosure can provide a self-service customer interface. The web server 170 can provide the stored web pages to a contact via one or more data switches and the network 130. In some examples, the web pages are also provided via a gateway and/or firewall.

It should be understood that some or all instances of web interactions may be recorded using the recording system 160. Recording web self-service interactions can be used for example: to help the contact center to improve the web self-service interface, identify problem areas, record transactions, etc. The recording system 160 could be operable to store whole or partial web pages or merely store universal resource locators (URLs) associated with the session. The recorded web pages or URLs are recorded with timing information and machine identification. This information can be used to distinguish among sessions and to rebuild sessions for later replay.

Application server 180 can be used to provide interaction between a contact center and a contact through applications such as a chat application, an instant messaging application, a customer service application, etc. Interactions can be routed between the application server 180 and the contact 120 via a data switch included among the internal network infrastructure 140. Moreover, the application server 180 can interact with a database 150. The database 150 in various examples can provide customer information, account information, application information, etc. to facilitate interaction with the application server.

It should be understood that some or all of these application interactions can be recorded via the recording system 160. The internal network infrastructure 140 in various examples can be configured to provide a network tap, or duplicate media stream to the recording system 160. Alternatively, the recording system 160 could receive a media stream associated with the interaction directly to the application server 180. The recording system 160 in some examples can thereafter determine whether to record the interaction based upon whether the interaction or some other circumstance associated with the interaction satisfies a predefined rule. In yet other examples, the recording system 160 can be configured to record all interactions captured via the internal network infrastructure 140.

An interactive voice response (IVR) server 190 can be configured to provide interactions with contacts via an IVR system 190. As should be understood, an IVR unit provides a voice-based menu type system to a contact, such as a caller. The contact can navigate the interactive voice menu by pressing numbers on a telephone to produce a DTMF tone signal which is sent back to the IVR server 190 via the internal call center network infrastructure 140. The IVR server 190 interprets the DTMF tone and determines the contact's instructions based on the tone. Alternatively, the IVR server 190 may include voice recognition software, such that it can receive voice commands from the contact and interpret the voice commands based on the voice recognition software. The next menu is then played to the contact via the internal network infrastructure and the external network, which can be the PSTN, advanced intelligent network (AIN), or a VoIP network which connects to the customer.

Interactions between the contact and the IVR server 190 can be captured and recorded by a recording system 160. The recording system 160, for example, can use a network tap as described above with a data switch in the internal network infrastructure to capture the interaction. In other examples, the recording system 160 could capture the interaction by receiving a duplicate media stream from a data switch or data device as if the recording system 160 were a party to the conversation. It should also be recognized that in some examples, the recording system 160 could receive a media stream directly from the IVR server 190. Once the recording system 160 receives the interaction, in some examples, it can determine whether to record the interaction based upon whether the interaction or some other circumstance associated with the interaction satisfies a predefined rule. In yet other examples, the recording system 160 can be configured to record all interactions captured via the internal network infrastructure 140.

As is known in the art, encryption can be made available in digital systems to secure the data against misuse by third parties not intended to receive the information encapsulated in the encrypted data. For security, communications can be similarly encrypted. Some contact centers choose to encrypt all data being transmitted via the internal network(s), thereby protecting the data against interception. It should be noted, though, that encrypting network data including any interactions can impose an impediment to the recording system 160. Decrypting encrypted data without an encryption key can be difficult. While cracking an encryption key is possible, the difficulty to cracking a key can become prohibitive to decryption in a contact center environment. For example, recorded interactions may grow at a greater rate than the systems ability to crack the encryption key for each interaction. The recording system 160 of this disclosure interacts with the internal network infrastructure 140 to receive an key for encrypted interactions.

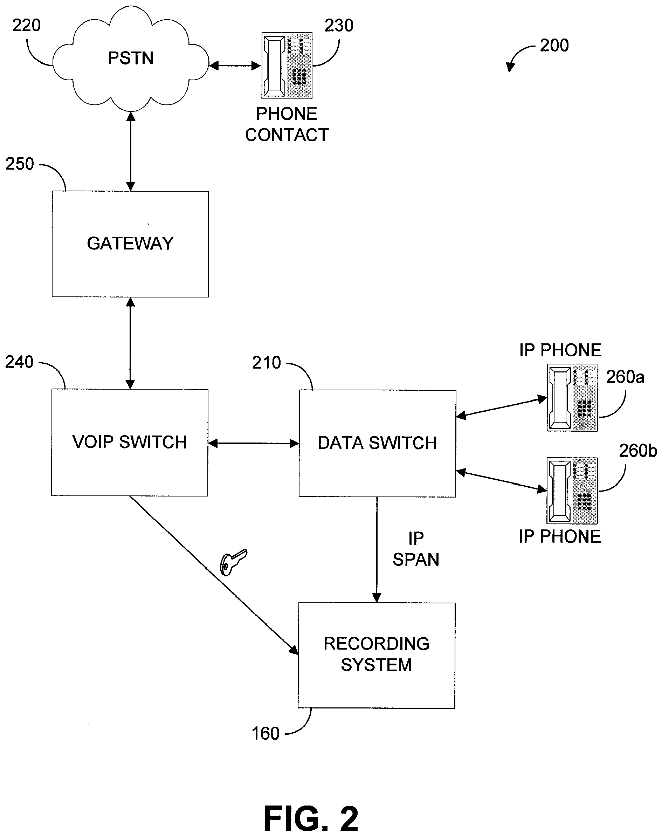

An example of an encryption key being provided by the internal network infrastructure is shown with respect to FIG. 2. FIG. 2 generally shows a voice interaction system wherein voice interactions are encrypted within the contact center network and the encrypted interaction data is captured via an IP span between a data switch 210 and a recording system 160. It should be recognized that communications external to the contact center network including the external network such as the PSTN 220 and contact phone 230 may also be encrypted in accordance with this disclosure. Encryption key exchange for these interactions occurs during call setup. A VoIP switch 240 receives the call control protocol (for example: SIP, SCCP, etc.) from the network gateway 250 and determines that the call is to be encrypted. The VoIP switch then distributes encryption key information to the IP phone 260 via a data switch 210 and to the network gateway 250. The VoIP switch 240 also distributes encryption key information to the recording system 160, such that the recording system 160 can decrypt an encrypted voice interaction captured from a data switch 210 in accordance with the present disclosure.

In some examples of this disclosure the encryption key information is distributed to the recorder in an encrypted format so as to protected the encryption key information from interception. Related to the example shown in FIG. 2, the VoIP switch providing the encryption key information encrypts the encryption key information using a public key associated with the recording device 160. The recording system 160 can thereafter decrypt the encryption key information using its private key. It should be understood that the encryption key information can be stored in encrypted format so as to protect both the encryption key information and the encrypted interaction against theft.

In other examples of this disclosure, the encrypted interaction data can be stored in encrypted format such that it is protected against hacking. Such a system could store the encryption key for later decryption of the encrypted interaction data, such as for example, upon a request to retrieve the interaction data for replay to a user. In some examples, the encryption key is stored in volatile memory associated with the recording system 160. In such examples, the encrypted interaction data can be decrypted prior to storing the interaction data to a system data store associated with the recording system 160. In other examples, the encryption key is stored in non-volatile memory until the encrypted interaction data is to be decrypted. The encrypted interaction data can be decrypted upon receiving a retrieval and playback request from a user. Alternatively, the encrypted interaction data can be decrypted during a period of low processor usage.

In an alternative example, the data could be decrypted using the encryption key information received from the VoIP switch 240, and re-encrypted using a different encryption key and/or technique. In some examples, unencrypted interaction data can be encrypted using an encryption engine better suited for long term storage, archival and/or retrieval. It should be recognized that in some embodiments of this disclosure, both the encrypted interaction data and the encryption key information are stored in encrypted format so as to secure the encryption key information and the encrypted interaction data is stored in encrypted format. It should be noted that it is not required by this disclosure that either are encrypted upon storage to disk. However, if the interaction data is unencrypted, the encryption key could be discarded so as to lessen the chances of an intruder cracking the encryption using an old encryption key.

In some examples, the encryption key information comprises an encryption key. In other examples of this disclosure the encryption key information may be a session identification, such that the recording system 160 can request an encryption key associated with the session identification from the VoIP switch 240. It should be understood that in such examples, the VoIP switch 240 could have internal memory enabling it to access a stored encryption key associated with the session identification provided by the recording system 160. In yet further examples the encryption key information could be a key identifier, which could refer to a particular encryption key used by the VoIP switch 240. In this example, the VoIP switch 240 could use an encryption key and associate that key with a key identifier. The VoIP switch 240 could later retrieve the encryption key based upon the key identifier.

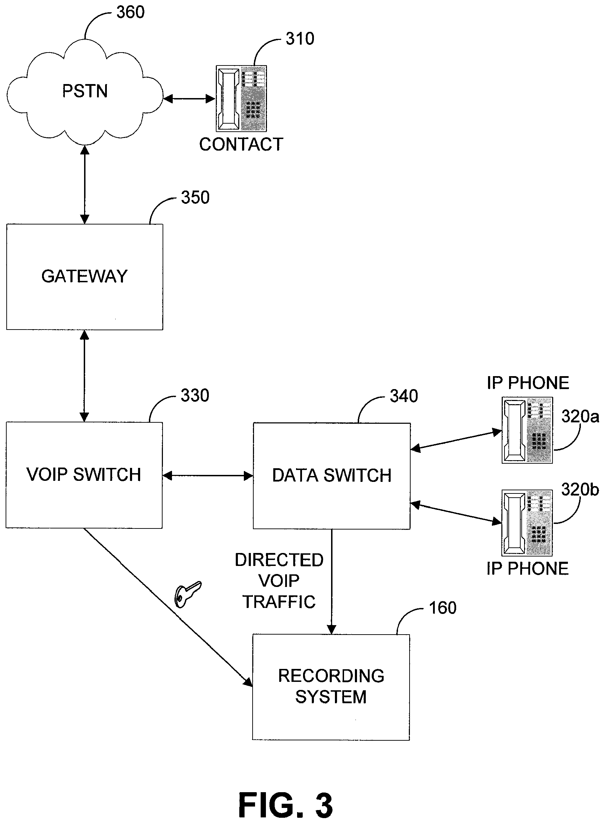

FIG. 3 shows another example of a recording system used to record encrypted audio interactions. In this example, the recording system 160 can obtains substantially real-time, direct access to the voice interaction data passing between the contact 310 and the agent via an IP phone 320. It should be understood that such access can occur via SSC or DMS, or any other sort of real-time connection that includes communicating the data streams to the recording system 160 as directed traffic. As a party to the voice interaction, the VoIP switch 330 is configured to send encryption key information for use in decrypting the encrypted interaction data to the recording system 160 during the setup for the voice interaction. Similarly, because the recorder has a recognized connection in the session, the IP Phone may communicate the encryption key to the recorder . The VoIP switch 330 also sends encryption keys to the IP phone 320 and a network gateway 350 for the contact center. The gateway translates the digital VoIP protocol for transmission over the PSTN 360 to the contact 310. It should be understood that in various examples of the present disclosure, the external network could be the Internet or an AIN. A data switch 340 then routes the interaction data to the recording system 160 using a real-time transport protocol (RTP). Alternatively, it should be understood that in various alternative examples interaction data can be communicated using a variety of transport protocols, including, for example, hypertext transfer protocol (HTTP), file transfer protocol (FTP), and internet relay chat (IRC), among many others.

After the call has been setup, the data switch 340 provides the recording system 160 with directed VoIP traffic. Once the recording system 160 receives the encrypted interaction data stream, it can decrypt the encrypted interaction data using the encryption key information received from the VoIP switch 330. In various examples, the encrypted interaction data stream can be decrypted in real-time. In this example, the encryption key information can be stored in volatile or non-volatile memory. Where the encrypted interaction data is decrypted in real time, predefined rules in various embodiments of this disclosure can be applied to the data to determine whether the data should be recorded to a system data store.

The recording system 160 can also be set in some examples up to encrypt any unencrypted data before storing data to the system data store. Interaction data that is re-encrypted can be encrypted using a different key than was used for encrypting the data between the IP phone 320 and the gateway 350. It should also be recognized that the same key that was used to encrypt the data between the IP phone 320 and the gateway 350 could be used for re-encrypting the data. Alternatively, the recording system 160 could use a different encryption algorithm to encrypt the data prior to storing the data in the system data store.

After encrypting the data, the recording system 160 can leave the data encrypted until it is requested to be decrypted. In some examples, the decryption request can result from a request to replay the data received from a user. In other examples, the encrypted interaction data may be decrypted in order to search the interaction data. Alternatively, the system can extract some data (e.g., contact identification, account number, subject, timestamps, agent identification, etc.) from the interaction and store extracted data in unencrypted format, such that searches can be performed on the extracted data, thereby providing a rudimentary search of associated encrypted data. Similarly, it could be

It should also be recognized that in some examples of the present disclosure, the recording system 160 can store the encryption key information in a key data store. The encrypted interaction data stream can then be stored directly to the system data store. The recording system can thereafter decrypt the data during idle times or times of low processor activity. Alternatively, the interaction data can be stored indefinitely in encrypted format. In such situations, the encryption key information would be stored for decrypting the encrypted interaction data upon direction from the recording system 160. The recording system 160 may be directed to decrypt data upon request from a user for replay of the voice interaction session, or upon a request to search from among the interaction data.

It should also be noted that in some examples of this disclosure the encryption key information includes the encryption key itself. In other examples, the encryption key information includes a session identifier. The session identifier can be transmitted to the VoIP switch 330 subsequent to capturing the data in order to receive a copy of the encryption key from the VoIP switch 330. The VoIP switch of this example would include memory operable to store session identifiers and associate them with encryption keys used by the VoIP switch 330. In yet further examples of this disclosure, the encryption key information can include a key identification. The key identification can be transmitted to the VoIP switch 330 in order to retrieve the encryption key. The VoIP switch 330 would therefore have the ability to associate an identifier with a particular key used by the VoIP switch 330.

In the example where single step conferencing (SSC) is used to communicate directed VoIP traffic to the recording system 160, the recording system 160 and agent IP phone 320a are automatically conferenced in to the voice interaction. Such conferencing typically occurs during call setup. The VoIP switch 330 is configured to send call initiation signals to both the agent IP phone 320a and to the recording system 160. Upon establishing a conference between the contact phone 310, the recording system 160 and the agent IP phone 320a, the VoIP switch 330 can handoff the voice interaction to the data switch 340 for communication of interaction data among the various parties to the voice interaction.

It should be understood that in such examples, the data switch sends directed traffic to the agent IP phone 320a as a party to the voice interaction, and to the recording system 160 as a party to the voice interaction. However, it should also be understood that the recording system 160 typically does not participate in the interaction, but rather receives the voice interaction data and can record the voice interaction data.

The voice interaction can also be encrypted in various examples of single step conferencing. In some examples, the contact center can specify encryption of the voice interaction data. For example, some contact centers may encrypt all data being transmitted on their internal network. Alternatively, encryption of the voice interaction data may be requested, for example, by the contact, by the agent, or by various traits associated with the interaction data itself, among many others. Thus, it should be understood that the decision to encrypt may be made based upon many different factors, and that each of these factors is intended to be included within the present disclosure.

Upon making the determination that the voice interaction traffic is to be encrypted, the VoIP switch 330 is programmed to distribute encryption key information to the parties between which traffic is intended to be encrypted. As should be understood, any number of encryption algorithms can be used to encrypt the information, and each such encryption algorithm is intended to be included within the scope of this disclosure. Encryption key information can enable the parties receiving encryption keys or encryption key information to encrypt and decrypt the voice interaction data received as part of the voice interaction. In some examples, the receipt of an encryption key is an indication to the device receiving the encryption key to encrypt the voice interaction data transmitted by the device, and to decrypt the voice interaction data received at the device using the encryption key. Alternatively, the VoIP switch 330 can affirmatively alert the devices that the voice interaction is to be encrypted.

In the example of SSC described above, a recording system 160 that is conferenced in to the voice interaction can receive the encryption key or an identifier associated with the encryption key and decrypt the data in substantial concurrence with the voice interaction and save the voice interaction to storage. Alternatively, the encryption key (or identifier) and the voice interaction data can be stored to disk, and the encryption key information can be used to decrypt the encrypted voice interaction anytime subsequent to the voice interaction.

It should also be understood that in various examples, the recording system 160 can be programmed selectively record voice interaction data. Such selective recording could enable the recording system to more efficiently utilize storage space as well as bandwidth. As an example of selective recording in accordance with this disclosure, the recording system 160 could be programmed to record the encrypted information on the basis of a schedule. In such an example, the recorder may be programmed to record encrypted voice interactions at certain times of the day, or at peak periods, or on a periodic basis.

Alternatively, the recording system could selectively record data based upon a set of rules. In some examples, the rules may call for recording data where specific events are detected, such as, for example, anger in the voice interaction, specific words being used, or periods of high call volume, among many others. Other examples of rules can include determining whether an encrypted call is to be recorded based upon computer-telephony integration (CTI) information or events, such as identification of the calling party, identification of the agent, a call being put on hold, a call being transferred, a call being conferenced, among many others, each of which is intended to be included within the scope of this disclosure.

In yet further examples, recording of a voice interaction may be triggered by an agent's request to record the voice interaction. In such an example, the agent could send a request to the recording system 160 using a workstation interface to the recording system via a network. However, it should be understood that there are many systems which could be used to communicate an agent's request to record the voice interaction to the recording system 160, and that each such system is intended to be included within the scope of this disclosure.

In various examples of the present disclosure, the VoIP switch 330 operates functionally as a private branch exchange. It should be noted that the recording system 160, in some instances, such as where the recording system 160 is conferenced, may be late connecting to the voice interaction. This can cause the recording system 160 to be excluded from recording a portion of the voice interaction data occurring before the recording system 160 is able to connect to the voice interaction. In such instances the VoIP switch 330, a private branch exchange, may be programmed to delay the connection to the agent IP phone 320a until the recording system 160 has completed its connection to the voice interaction. As such, the recording system 160 is operable to monitor the entire voice interaction without being excluded from a portion of the voice interaction based upon being belatedly connected to the voice interaction.

In further instances, a delay could also be used to provide the recording system 160 with a period of time in which a selective recording decision may be made. However, it should be recognized that in other examples the recording system 160 could include a buffer, thereby enabling the recording system 160 to temporarily store a discrete amount of data. A recording system 160 with a buffer could make the determination without delaying the voice interaction connection.

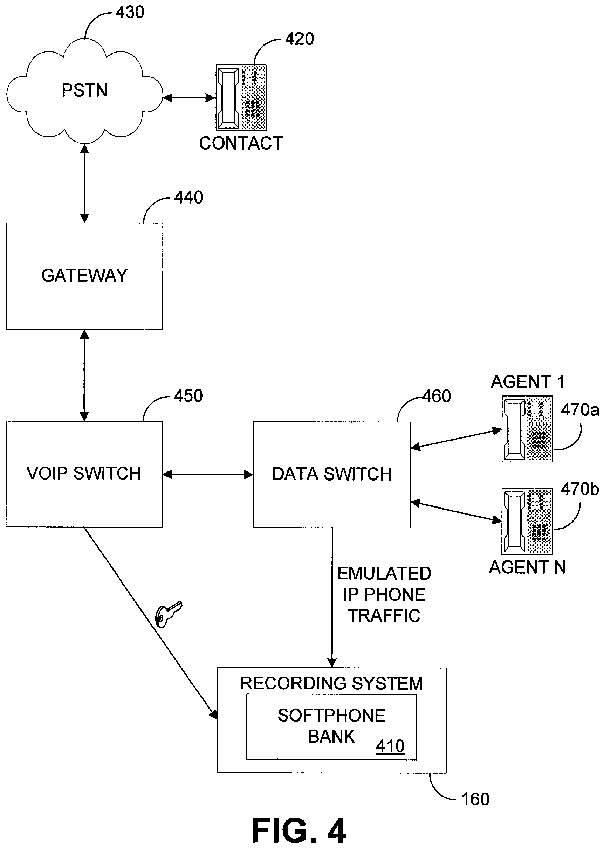

FIG. 4 shows a contact center environment for recording encrypted voice interactions using a soft-phone bank 410 co-located with a recording system 160. The contact 420 can contact the contact center via an external network such as a PSTN 430. It should be understood that in alternative examples of this disclosure the external network could be the Internet, an AIN or any other network suitable for transmitting communications between two parties. The contact center can then translate the circuit switched voice interaction received from the PSTN 430 into a packet switch VoIP format using a gateway 440. The VoIP control protocol switching is handled via a VoIP switch 450. The VoIP switch then hands the voice interaction to the data switch 460, which routes the call to the appropriate agent via one or more IP phones 470a, 470b. When the interaction is being encrypted, the VoIP switch 450 is configured to transmit the encryption keys to each of the gateway 440 and the IP phone 470. The VoIP switch 450 in accordance with the present disclosure is also configured to transmit encryption key information to the recording system 160 via soft-phone bank 410.

It should be understood that, where appropriate, the recording system 160 of FIG. 4 can include any of the functionality outlined above with respect to any of the other embodiments of this disclosure as described herein.

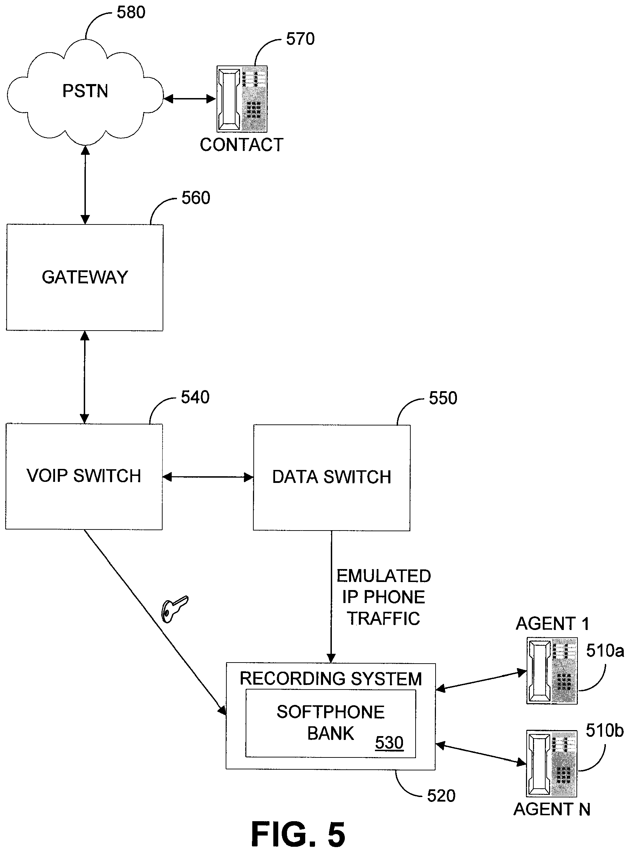

FIG. 5 depicts an architecture for recording encrypted voice interactions whereby one or more soft-phones interfaces 510a, 510b are connected to the recording system 520 via a soft-phone bank 530. The soft-phone bank 530 is operable to provide an interface through which the calls are routed. Because the soft-phone bank 530 is associated with a recording system, the recording system has access to the data that is traveling to and/or from the soft-phones interfaces 510a, 510b. Thus, the soft-phone bank receives the encryption key from the VoIP switch 540. It should be understood that the softphone bank, for example, could also be invited to record the call by the switch, the recorder/soft-phone bank could receive the information as part of the computer telephony integration (CTI) setup of the call, or the recorder/soft-phone bank could operate to set up the call, among many others.

Once the VoIP call has been set up, the soft-phone bank 530 receives the RTP stream from a data switch 550. The data switch handles the RTP stream from a gateway 560, which is operable to translate circuit switch voice interaction data from a contact 570 via an external network, such as for example, the PSTN 580. It should be understood, as noted above, that the external network could be any type of network configured to transport digital or analog, circuit-switch or packet-switched communications.

It should be understood that the recording system 160 of FIG. 5 can include any of the functionality outlined above with respect to any of the other embodiments of this disclosure as described herein.

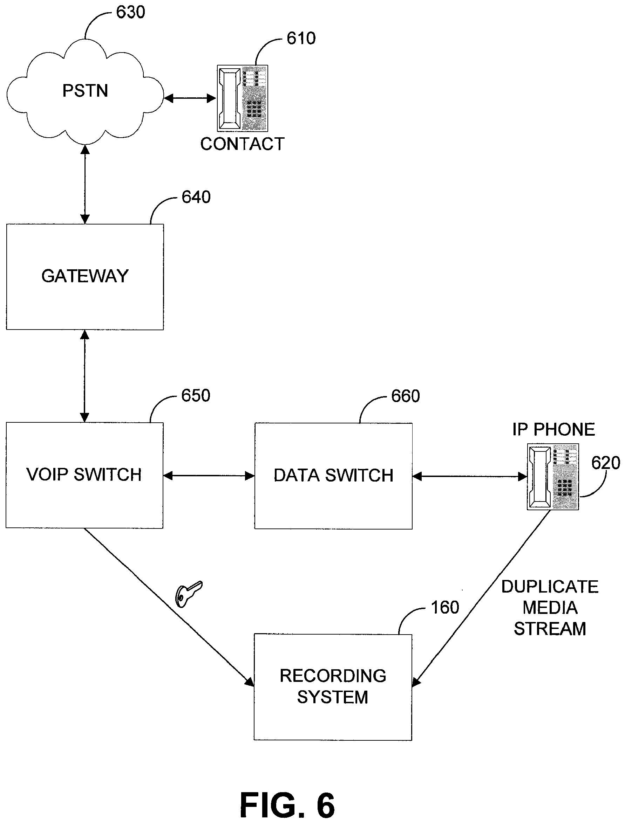

FIG. 6 depicts a recording system 160 configured to record voice interactions between a contact 610 and a contact center agent via IP phone 620 using a duplicate media stream. In this example, the contact 610 calls the contact center via a PSTN 630. It should be understood, however, that the network connecting the contact 610 to the contact center could be any sort of voice or data network operable to carry voice or data signals. In the example where the call is received via the PSTN 630, a gateway 640 receives the call and translates the call such that it can be communicated on the contact center network. A VoIP switch then operates to set up the call with the agent via IP phone 620. The VoIP switch 650 then transfers the call to data switch 660 for handling the data packets traveling between the contact phone 610 and the IP phone 620.

Once the call has been routed to the agent IP phone 620, the agent IP phone 620 starts interacting with the contact via an exchange of media streams with the contact. The VoIP switch 650 first makes a recording call to a bridge on the agent IP phone 620 to request the agent's voice stream. The VoIP switch 660 also makes a recording call to a bridge of the agent's IP phone to request the contact's voice stream. After the connection has been established for each of the agent's voice and contact's voice, the voice streams can be redirected to the recording system 160.

It should be understood that where the interaction is encrypted, the IP phone could supply either decrypted interaction streams to the recorder, or encrypted interaction streams to the recorder. Where the decrypted interaction streams are provided to the recorder, the recorder can store the data directly to disk. Alternatively, the recorder can use an encryption engine to encrypt the data prior to recording the interaction data to disk.

In the example, where the agent IP phone 620 provides encrypted streams to the recorder 160, the VoIP switch 650 can provide the encryption key to the recorder during setup of the recording call for the duplicate media stream between the agent IP phone 620 and the recorder 160. The recorder is thereby enabled to decrypt the data substantially in real-time or anytime thereafter. Moreover, the recorder can be configured to use an encryption engine to encrypt the interaction data substantially in real-time to receiving the data, or anytime thereafter. Furthermore, any of the features described herein with respect to recording systems can be applied with respect to the recording system 160 of FIG. 6.

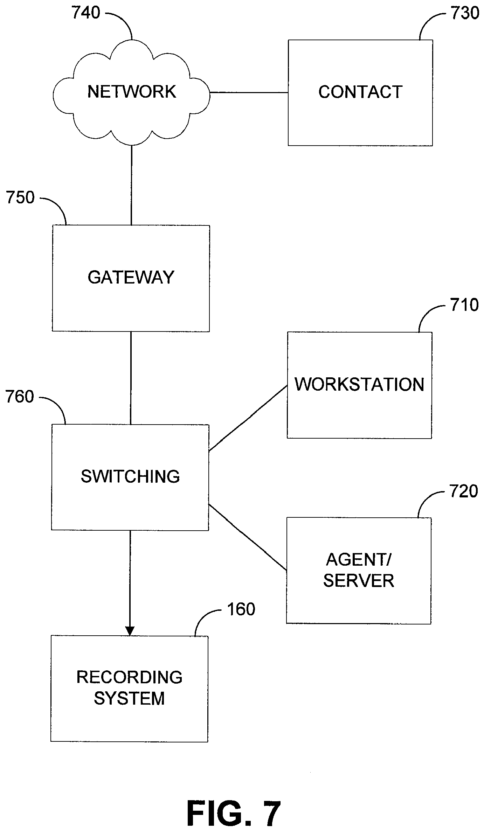

FIG. 7 shows a recording system 160 configured to record encrypted communications passing between a contact center workstation 710 or server 720 and a contact 730 via an external network 740. The external network 740 can be connected to the internal contact center network via a gateway 750, which is used to translate external protocol to internal protocol for incoming traffic, and internal protocol to external protocol for outgoing traffic. However, it should be understood that a gateway is not necessary where the internal and external networks are operating using the same protocol.

The interaction is controlled via switching 760. Switching 760 can provide control protocol for setup and teardown of the communication path. Switching 760 can also provide for key exchange between the contact 730 and the workstation 710 or server 720 in case of an encrypted interaction session. The switching 760 in the event of encrypted interactions can also provide encryption key information to the recording system 160. As described above the encryption key information can include the encryption key itself, or can include another mechanism through which the encryption key can be later derived. Alternatively, it should be noted that the switching 760 in some examples may contain a decryption engine. The decryption engine can enable the switching 760 to perform decryption of the interaction when the decryption engine is provided with the encrypted interaction stream by the recording system 160. As such, the encryption key remains secret, and the recording system is able to store the interaction data. Moreover, if security of the interaction is a concern, the switching can re-encrypt the decrypted interaction data using a public key received from the recording system 160. The re-encrypted interaction data can then be securely transmitted to the recording system 160, where it can be decrypted using a private key known only to the recording system 160.

It should be understood that the block diagram of FIG. 7 can be used to record a variety of types of encrypted interaction data, including, among many others: chat data, screen data, application data, instant messaging data, web self-service data, etc. Further, any of the features described herein with respect to recording systems can be applied with respect to the recording system 160 of FIG. 7

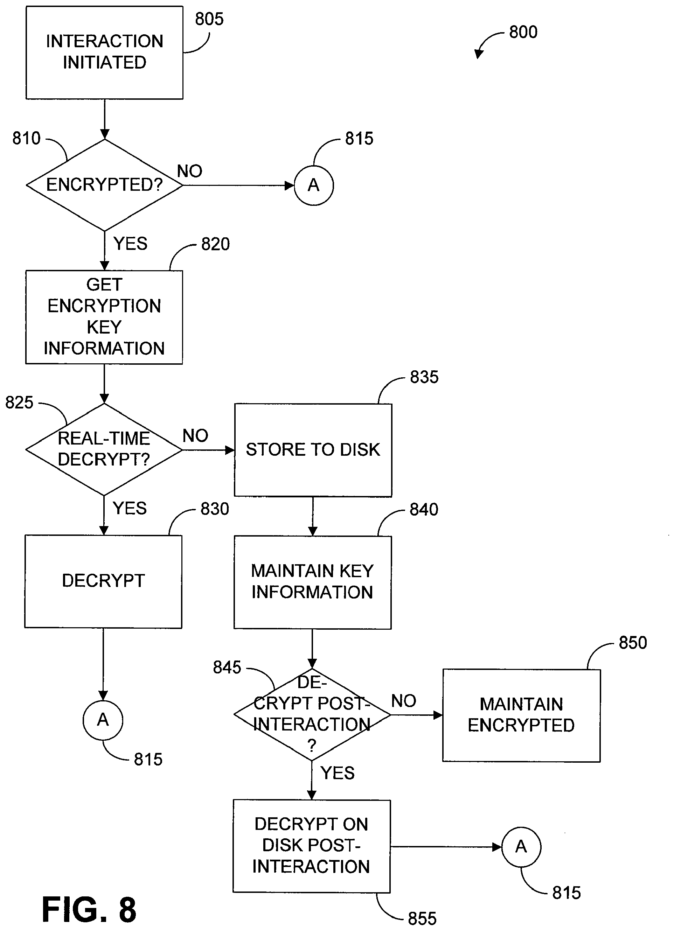

An example operational scenario 800 depicting a process for a recording system of the present disclosure is depicted in FIG. 8. The recording process begins at step 805, whereby the operational scenario determines that a interaction has been initiated. Upon initiation of the interaction, the operational scenario 800 determines whether the interaction is an encrypted interaction in step 810. If the interaction is not encrypted, the operational scenario 800 proceeds to a storage process as noted by block 815.

If the interaction is determined to have been encrypted, the operational scenario 800 continues to step 820, wherein the encryption key information is obtained. After obtaining the encryption key information, the operational scenario 800 determines whether real-time decryption is to be performed on the encrypted interaction data. This determination can be made, for example, among many others: by default, according to system setup, based on available system resources, or any reason that could affect system performance. As should be understood, the encrypted interaction data is being captured in parallel with operational scenario 800. Where the encrypted interaction data is supposed to be decrypted in real-time, the operational scenario 800 uses the obtained encryption key information to decrypt the encrypted interaction data, as shown in step 830. The operational scenario 800 then proceeds to a storage process as noted by block 815.

Returning to decision block 825, if it is determined that the data is not to be decrypted in real-time, the operational scenario 800 stores the encrypted interaction data to disk in the encrypted format in which the interaction data was received, as depicted by step 835. Further, the operational scenario 800 could maintain the encryption key information in accordance with step 840. The encrypted key information could be stored in encrypted format or unencrypted format, in accordance with this disclosure. At step 845, the operational scenario determines whether the interaction should be decrypted on disk after the interaction is complete. In such circumstances, the operational scenario may wait and decrypt the encrypted interaction when the system resources are at low usage, thereby enabling a contact center to achieve similar results with lower system requirements. If the data is not to be decrypted post-interaction, the system maintains the interaction in encrypted format indefinitely, as shown in step 850.

If the data is to be decrypted post-interaction, the operational scenario 800 decrypts the encrypted interaction data and stores the decrypted interaction to a system data store after the interaction is complete, as shown by step 855. The operational scenario 800 then proceeds to a storage process as noted by block 815.

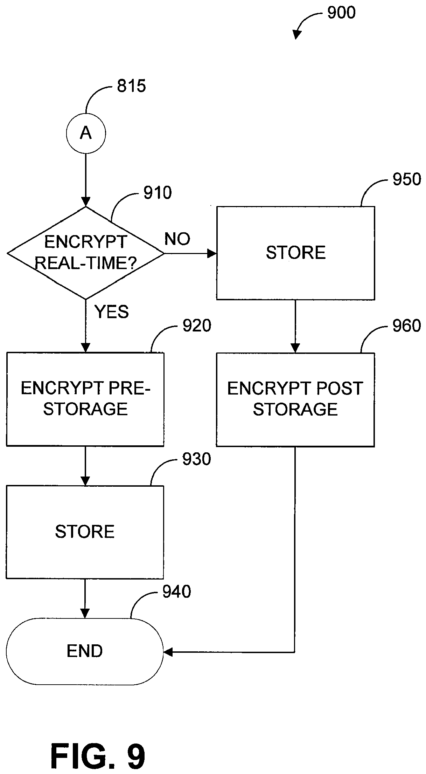

An example of a storage process as implicated by step 815 of FIG. 8 is shown in FIG. 9. The storage process of FIG. 9 begins at step 910, whereby operational scenario 900 determines whether the recording system should encrypt the interaction data in real-time prior to storing the unencrypted interaction data to a system data store. If the data is to be encrypted prior to storage to disk, the operational scenario 900 proceeds to step 920, whereby the unencrypted interaction data is encrypted prior to storage to a system data store. The operational scenario 900 then stores the encrypted interaction data to the system data store as shown by step 930. The operational scenario 900 then terminates at block 940.

If the operational scenario determines that the unencrypted interaction data is not to be encrypted prior to storage to a system data store, the operational scenario proceed to step 950, where the unencrypted interaction data is stored to a system data store. The data can subsequently be encrypted, as shown by step 960. The operational scenario then terminates at block 940.

A number of embodiments of this disclosure have been described. Nevertheless, it will be understood that various modifications may be made without departing from the scope of the disclosure. For example, some systems may include the ability to discriminate between encrypted and unencrypted data, others may include keeping the interaction data encrypted for security, while yet others may include abstracting upon the encryption key and/or cooperating with a switch to decrypt the encrypted interaction. The invention is defined by the appended claims.

## Claims

1. A system (160) for recording an encrypted data stream, the encrypted data comprising a contact center interaction data, the system (160) comprising:
a control protocol switch interface configured to interface with a protocol switch and receive an interaction setup signal, the interaction setup signal including an exchange of encryption key information associated with an interaction (820);
an encryption key information buffer coupled to the control protocol switch interface, the encryption key information buffer being configured to receive the encryption key information and hold the encryption key information;
a data switch interface configured to interface with a data switch (210, 340, 460, 550, 660) and receive an encrypted data stream associated with the interaction, the encrypted data stream being encrypted such that devices that do not have an encryption key associated with the encrypted data stream are inhibited from reviewing the interaction data;
a recording module configured to record the interaction based on an event detected in the interaction; wherein
the system is operable to subsequently decrypt the encrypted data stream (855) using associated encryption key information held in the encryption key information buffer, wherein
the system (160) is not a party to the interaction, and
wherein the recording module receives a duplicate media stream representing the interaction, and the encryption key information is received from a source of the duplicate media stream.

2. The system of claim 1, wherein the encryption key information is obtained (820) via a control protocol interface between the system and the control protocol switch.

3. The system of claim 2, wherein the encryption key information used to decrypt the control protocol is requested from the control protocol switch based upon an endpoint or call identification, and is provided during the interaction or after the interaction is complete.

4. The system of claim 1, further comprising a soft-phone bank (530) operable to receive interactions and communicate the interactions to the recording module.

5. The system of claim 1, wherein the recording module comprises a decryption buffer and is configured to decrypt the encrypted data stream in volatile storage prior to storage to a data store(830, 855) using the decryption buffer during idle times of the system.

6. The system of claim 5, further comprising an encryption module configured to generate a new key separately from the encryption key information used to encrypt the interaction, the encryption module being further configured to re-encrypt the decrypted interaction data using the new key.

7. A method for recording encrypted interaction data, the method comprising the steps of:
receiving an interaction setup signal at a recording device, the interaction setup signal comprising encryption key information associated with interaction data;
storing the encryption key information in a key storage, the key storage being configured to store encryption key information for retrieval (820);
receiving encrypted data stream at the recording device, the encrypted data stream representing an encrypted form of interaction data, the encryption being configured to inhibit review of the interaction data without an encryption key;
storing the encrypted form of the interaction data in a system data store (835, 850) based on an event detected in the interaction; wherein
the encrypted form of the interaction data is operable to be decrypted using the stored encryption key information (830, 855), wherein
the recording device is not a party to the interaction, and
wherein a data switch interface of the recording device receives a duplicate media stream representing the interaction, and the encryption key information is received from a source of the duplicate media stream.

8. The method of claim 7, wherein the recording device negotiates to receive the encryption key information during setup of the interaction.

9. The method of claim 7, wherein the encryption key information is obtained via a control protocol sent between the recording device and a control protocol switch (330).

10. The method of claim 9, wherein the encryption key information used to decrypt the control protocol is requested from the control protocol switch based upon an endpoint or call identification, and is provided during the interaction or after the interaction is complete.

11. The method of claim 7, further comprising providing a soft-phone bank (530) at the recording device, the softphone bank (530) being operable to receive interactions and route the interactions to a contact center agent.

12. The method of claim 7, further comprising:
prior to storing the encrypted form of the interaction data in the system data store:
decrypting the interaction data (830, 855) during idle times of the recording device;
generating a new key separate from the encryption key information; and
re-encrypting the decrypted interaction data using the new key.

## Patentansprüche

1. System (160) zum Aufzeichnen eines verschlüsselten Datenstroms, wobei die verschlüsselten Daten Kontaktcenter-Wechselwirkungsdaten umfassen, wobei das System (160) Folgendes umfasst:
eine Steuerprotokollvermittlungsschnittstelle, die konfiguriert ist, mit einer Protokollvermittlung über eine Schnittstelle verbunden zu sein und ein Wechselwirkungseinstellsignal zu empfangen, wobei das Wechselwirkungseinstellsignal einen Austausch von Verschlüsselungsschlüsselinformationen, die einer Wechselwirkung (820) zugeordnet sind, enthält;
einen Verschlüsselungsschlüsselinformations-Zwischenspeicher, der an die Steuerprotokollvermittlungsschnittstelle gekoppelt ist, wobei der Verschlüsselungsschlüsselinformations-Zwischenspeicher konfiguriert ist, die Verschlüsselungsschlüsselinformationen zu empfangen und die Verschlüsselungsschlüsselinformationen zu enthalten;
eine Datenvermittlungsschnittstelle, die konfiguriert ist, mit einer Datenvermittlung (210, 340, 460, 550, 660) über eine Schnittstelle verbunden zu sein und einen verschlüsselten Datenstrom zu empfangen, der der Wechselwirkung zugeordnet ist, wobei der verschlüsselte Datenstrom derart verschlüsselt ist, dass Vorrichtungen, die keinen Verschlüsselungsschlüssel besitzen, der dem verschlüsselten Datenstrom zugeordnet ist, gehindert werden, die Wechselwirkungsdaten einzusehen;
ein Aufzeichnungsmodul, das konfiguriert ist, die Wechselwirkung anhand eines Ereignisses aufzuzeichnen, das in der Wechselwirkung detektiert wird; wobei
das System betreibbar ist, nacheinander den verschlüsselten Datenstrom (855) unter Verwendung zugeordneter Verschlüsselungsschlüsselinformationen, die in dem Verschlüsselungsschlüsselinformations-Zwischenspeicher enthalten sind, zu entschlüsseln, wobei
das System (160) kein Teilnehmer an der Wechselwirkung ist und
wobei das Aufzeichnungsmodul einen kopierten Medienstrom empfängt, der die Wechselwirkung repräsentiert, und die Verschlüsselungsschlüsselinformationen von einer Quelle des kopierten Medienstroms empfangen werden.

2. System nach Anspruch 1, wobei die Verschlüsselungsschlüsselinformationen über eine Steuerprotokollschnittstelle zwischen dem System und der Steuerprotokollvermittlung empfangen werden (820).

3. System nach Anspruch 2, wobei die Verschlüsselungsschlüsselinformationen, die verwendet werden, um das Steuerprotokoll zu entschlüsseln, von der Steuerprotokollvermittlung anhand eines Endpunktes oder von Anrufsinformationen angefordert werden und während der Wechselwirkung oder nachdem die Wechselwirkung abgeschlossen ist, geliefert werden.

4. System nach Anspruch 1, das ferner eine Softphone-Bank (530) umfasst, die betreibbar ist, Wechselwirkungen zu empfangen und die Wechselwirkungen an das Aufzeichnungsmodul zu kommunizieren.

5. System nach Anspruch 1, wobei das Aufzeichnungsmodul einen Entschlüsselungszwischenspeicher umfasst und konfiguriert ist, den verschlüsselten Datenstrom in einem flüchtigen Speicher vor dem Speichern in einen Datenspeicher (830, 855) unter Verwendung des Entschlüsselungszwischenspeichers während Ruhezeiten des Systems zu entschlüsseln.

6. System nach Anspruch 5, das ferner ein Verschlüsselungsmodul umfasst, das konfiguriert ist, einen neuen Schlüssel getrennt von den Verschlüsselungsschlüsselinformationen, die verwendet werden, um die Wechselwirkung zu verschlüsseln, zu erzeugen, wobei das Verschlüsselungsmodul ferner konfiguriert ist, die entschlüsselten Wechselwirkungsdaten unter Verwendung des neuen Schlüssels neu zu verschlüsseln.

7. Verfahren zum Aufzeichnen von verschlüsselten Wechselwirkungsdaten, wobei das Verfahren die folgenden Schritte umfasst:
Empfangen eines Wechselwirkungseinstellsignals an einer Aufzeichnungsvorrichtung, wobei das Wechselwirkungseinstellsignal Verschlüsselungsschlüsselinformationen enthält, die den Wechselwirkungsdaten zugeordnet sind;
Speichern der Verschlüsselungsschlüsselinformationen in einem Schlüsselspeicher, wobei der Schlüsselspeicher konfiguriert ist, Verschlüsselungsschlüsselinformationen für eine Wiedergewinnung (820) zu speichern;
Empfangen eines verschlüsselten Datenstroms bei der Aufzeichnungsvorrichtung, wobei der verschlüsselte Datenstrom eine verschlüsselte Form von Wechselwirkungsdaten repräsentiert, wobei die Verschlüsselung konfiguriert ist, ein Einsehen der Wechselwirkungsdaten ohne einen Verschlüsselungsschlüssel zu verhindern;
Speichern der verschlüsselten Form der Wechselwirkungsdaten in einem Systemdatenspeicher (835, 850) anhand eines Ereignisses, das in der Wechselwirkung detektiert wird; wobei
die verschlüsselte Form der Wechselwirkungsdaten betreibbar ist, unter Verwendung der gespeicherten Verschlüsselungsschlüsselinformationen (830, 855) entschlüsselt zu werden, wobei
die Aufzeichnungsvorrichtung kein Teilnehmer an der Wechselwirkung ist und
wobei eine Datenvermittlungsschnittstelle der Aufzeichnungsvorrichtung einen kopierten Medienstrom empfängt, der die Wechselwirkung repräsentiert, und die Verschlüsselungsschlüsselinformationen von einer Quelle des kopierten Medienstroms empfangen werden.

8. Verfahren nach Anspruch 7, wobei die Aufzeichnungsvorrichtung verhandelt, um die Verschlüsselungsschlüsselinformationen während eines Einstellens der Wechselwirkung zu empfangen.

9. Verfahren nach Anspruch 7, wobei die Verschlüsselungsschlüsselinformationen über ein Steuerprotokoll empfangen werden, das zwischen der Aufzeichnungsvorrichtung und einer Steuerprotokollvermittlung (330) gesendet wird.

10. Verfahren nach Anspruch 9, wobei die Verschlüsselungsschlüsselinformationen, die verwendet werden, um das Steuerprotokoll zu entschlüsseln, von der Steuerprotokollvermittlung anhand eines Endpunktes oder von Anrufsinformationen angefordert werden und während der Wechselwirkung oder nachdem die Wechselwirkung abgeschlossen ist, geliefert werden.

11. Verfahren nach Anspruch 7 das ferner umfasst, eine Softphone-Bank (530) an der Aufzeichnungsvorrichtung bereitzustellen, wobei die Softphone-Bank (530) betreibbar ist, Wechselwirkungen zu empfangen und die Wechselwirkungen an einen Kontaktcenter-Bearbeiter weiterzuleiten.

12. Verfahren nach Anspruch 7, das ferner Folgendes umfasst:
vor dem Speichern der verschlüsselten Form der Wechselwirkungsdaten in dem Systemdatenspeicher:
Entschlüsseln der Wechselwirkungsdaten (830, 855) während Ruhezeiten der Aufzeichnungsvorrichtung;
Erzeugen eines neuen Schlüssels getrennt von den Verschlüsselungsschlüsselinformationen; und
Neuverschlüsseln der entschlüsselten Wechselwirkungsdaten unter Verwendung des neuen Schlüssels.

## Revendications

1. Système (160) d'enregistrement d'un flux de données cryptées, les données cryptées comprenant des données d'interaction de centre de contact, le système (160) comprenant :
une interface de commutation de protocole de commande configurée pour s'interfacer avec un commutateur de protocole et recevoir un signal d'établissement d'interaction, le signal d'établissement d'interaction comportant un échange d'informations de clé de cryptage associées à une interaction (820) ;
une mémoire tampon d'information de clé de cryptage couplée à l'interface de commutation de protocole de commande, la mémoire tampon d'informations de clé de cryptage étant configurée pour recevoir les informations de clé de cryptage et conserver les informations de clé de cryptage ;
une interface de commutation de données configurée pour s'interfacer avec un commutateur de données (210, 340, 460, 550, 660) et recevoir un flux de données cryptées associé à l'interaction, le flux de données cryptées étant crypté de telle sorte que des dispositifs n'ayant pas de clé de cryptage associée au flux de données cryptées soient empêchés de passer en revue les données d'interaction ;
un module d'enregistrement configuré pour enregistrer l'interaction sur la base d'un événement détecté dans l'interaction ; dans lequel
le système est exploitable pour décrypter subséquemment le flux de données cryptées (855) en utilisant des informations de clé de cryptage associées conservées dans la mémoire tampon d'informations de clé de cryptage,
le système (160) ne prenant pas part à l'interaction, et
dans lequel le module d'enregistrement reçoit un flux multimédia dupliqué représentant l'interaction, et les informations de clé de cryptage sont reçues depuis une source du flux multimédia dupliqué.

2. Système selon la revendication 1, dans lequel les informations de clé de cryptage sont obtenues (820) par l'intermédiaire d'une interface de protocole de commande entre le système et le commutateur de protocole de commande.

3. Système selon la revendication 2, dans lequel les informations de clé de cryptage utilisées pour décrypter le protocole de commande sont demandées auprès du commutateur de protocole de commande sur la base d'une identification de point d'accès ou d'appel, et sont fournies durant l'interaction ou au terme de l'interaction.

4. Système selon la revendication 1, comprenant en outre un banc de softphone (530) exploitable pour recevoir des interactions et communiquer les interactions au module d'enregistrement.

5. Système selon la revendication 1, dans lequel le module d'enregistrement comprend une mémoire tampon de décryptage et est configuré pour décrypter le flux de données cryptées dans une mémoire volatile avant le stockage dans une mémoire de données (830, 855) en utilisant la mémoire tampon de décryptage durant des temps d'inactivité du système.

6. Système selon la revendication 5, comprenant en outre un module de cryptage configuré pour générer une nouvelle clé séparément des informations de clé de cryptage utilisées pour crypter l'interaction, le module de cryptage étant configuré en outre pour crypter à nouveau les données d'interaction décryptées au moyen de la nouvelle clé.

7. Procédé d'enregistrement de données d'interaction cryptées, le procédé comprenant les étapes de :
réception d'un signal d'établissement d'interaction au niveau d'un dispositif d'enregistrement, le signal d'établissement d'interaction comprenant des informations de clé de cryptage associées à des données d'interaction,
mémorisation des informations de clé de cryptage dans une mémoire de clé, la mémoire de clé étant configurée pour mémoriser des informations de clé de cryptage en vue de leur recouvrement (820) ;
réception d'un flux de données cryptées au niveau du dispositif d'enregistrement, le flux de données cryptées représentant une forme cryptée de données d'interaction, le cryptage étant configuré pour empêcher le passage en revue des données d'interaction en l'absence d'une clé de cryptage ;
mémorisation de la forme cryptée des données d'interaction dans une mémoire de données système (835, 850) sur la base d'un événement détecté dans l'interaction ; dans lequel
la forme cryptée des données d'interaction est exploitable pour être décryptée au moyen des informations de clé de cryptage mémorisées (830,855), dans lequel
le dispositif d'enregistrement ne prend pas part à l'interaction, et
dans lequel une interface de commutation de données du dispositif d'enregistrement reçoit un flux multimédia dupliqué représentant l'interaction, et les informations de clé de cryptage sont reçues depuis une source du flux multimédia dupliqué.

8. Procédé selon la revendication 7, dans lequel le dispositif d'enregistrement négocie pour recevoir les informations de clé de cryptage durant l'établissement de l'interaction.

9. Procédé selon la revendication 7, dans lequel les informations de clé de cryptage sont obtenues par l'intermédiaire d'un protocole de commande envoyé entre le dispositif d'enregistrement et un commutateur de protocole de commande (330).

10. Procédé selon la revendication 9, dans lequel les informations de clé de cryptage utilisées pour décrypter le protocole de commande sont demandées auprès du commutateur de protocole de commande sur la base d'une identification de point d'accès ou d'appel, et sont fournies durant l'interaction ou au terme de l'interaction.

11. Procédé selon la revendication 7, comprenant en outre la fourniture d'un banc de softphone (530) au niveau du dispositif d'enregistrement, le banc de softphone (530) étant exploitable pour recevoir des interactions et router les interactions vers un agent de centre de contact.

12. Procédé selon la revendication 7, comprenant en outre :
avant la mémorisation de la forme cryptée des données d'interaction dans la mémoire de données système :
le décryptage des données d'interaction (830, 855) durant des temps d'activité du dispositif d'enregistrement ;
la génération d'une nouvelle clé distincte des informations de clé de cryptage ; et
le cryptage à nouveau des données d'interaction décryptées au moyen de la nouvelle clé.
